# EUROPEAN PATENT SPECIFICATION

(11) **EP 4 644 759 B1**
(45) Date of publication and mention of the grant of the patent: **21.10.2026**
(21) Application number: 25173163.4
(22) Date of filing: 29.04.2025
(51) Int. Cl.: F16M 11/10, G03B 17/56

(54) **LOAD BALANCING DEVICE FOR HEADS FOR FILM AND TELEVISION SHOOTS**
LASTAUSGLEICHSVORRICHTUNG FÜR KÖPFE VON FILM- UND FERNSEHTRIEBEN
DISPOSITIF D'ÉQUILIBRAGE DE CHARGE POUR TÊTES DE FILM ET DE PRISES DE TÉLÉVISION

(30) Priority: 02.05.2024 IT 202400009889
(43) Date of publication of application: 05.11.2025
(73) Proprietor: Cartoni S.p.A.- Società Benefit, 00159 Roma (RM) (IT)
(72) Inventor: FIORE, Alessandro, 00159 ROMA (RM) (IT)
(74) Representative: Mulas, Chiara

(56) References cited:
- EP-B1- 1 640 653

## Description

The present invention concerns a load balancing device for heads for film and television shoots.

More precisely, the present invention concerns a mechanical device that allows the counterbalancing of the load of a filming device weighing on a support head for film or television shoots, for weights that vary considerably from one another depending on the type and size of the filming device and with a consistency of performance over the entire vertical panning arc, also called working arc.

In the state of the art, said type of balancing device for cameras comprises one or more profiled elements, referred to as rocker arms or wings, which through one or more springs create a reaction force to the gravity acting on the filming device or the camera.

This reaction force, generated by an elastic element, is transmitted via a connecting rod to an eccentric body that acts as a crank, obtained on a side portion of the head adjacent to the vertical axis of rotation of the head itself at a fixed distance called *eccentricity,* thus allowing the balancing of the camera mounted on the balancing device. The connecting rod is pivoted on the eccentric portion and has the centre of rotation on said eccentric portion.

In order to obtain a consistent counterbalancing performance, the moment acting on the device due to the presence of the camera must be cancelled out by an opposing moment or "reacting" moment, which must be of a value equal and opposite to the moment acting throughout the working arc, equal to -90° - +90°, thereby compensating for the load caused by the variation of the position of the camera's centre of gravity for each different angle of use.

An example is described in the Italian patent no. IT 102004901246667 or its family member EP 1 640 653 B1 in the name of the same Applicant. This patent document describes a balancing device for a videocamera head wherein a crank corresponding to the eccentric portion, a connecting rod and a rocker arm form, together with a frame element, a kinematic chain of three mobile elements of a Grashof articulated quadrilateral.

In this type of solution, the eccentric portion is pivoted in an eccentric position, at a fixed distance, referred to as *eccentricity,* from the axis of rotation of the camera head, thus having the centre of rotation in an eccentric position with respect to the camera's centre of rotation.

In this articulated quadrilateral, in case the camera is positioned at 0°, i.e. halfway through said working arc with respect to the axis of rotation of the balancing device, the eccentric portion aligns with the connecting rod, thereby representing a specific mechanism configuration called dead point configuration or also, as will be referred to from now on, singularity configuration.

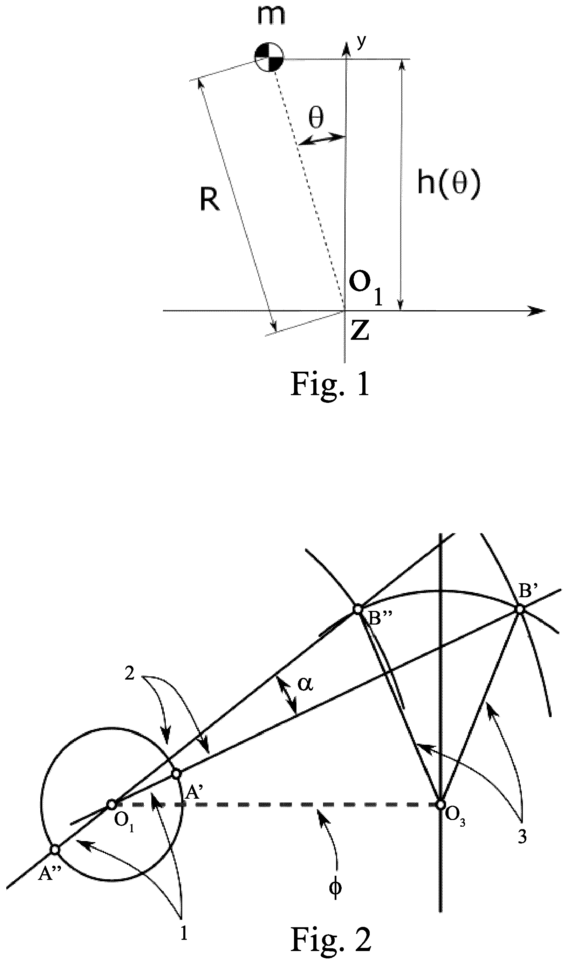

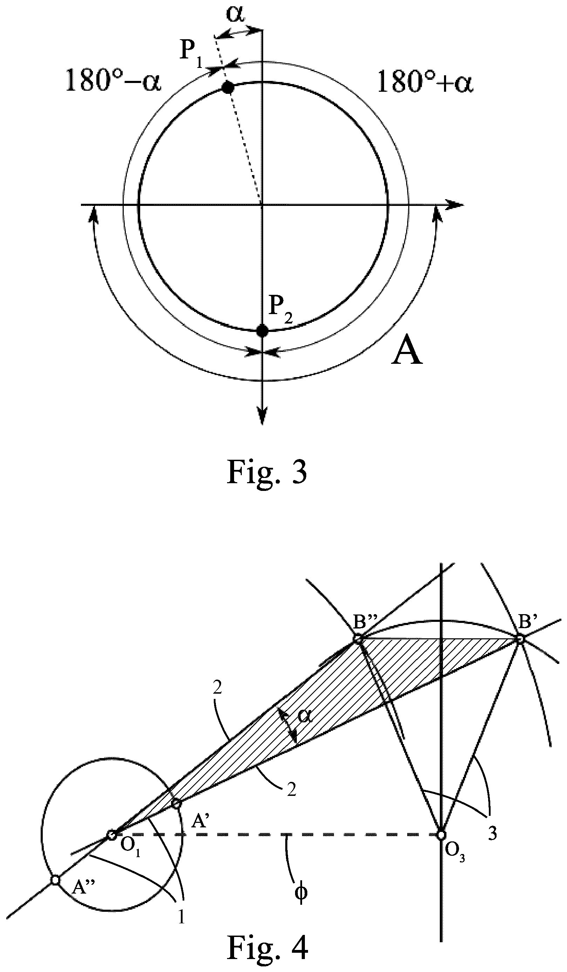

With reference to Figures 2 and 3, it is possible to view, respectively, the graphical identification of the dead point configurations P for an articulated quadrilateral of the type mentioned above, and a graphical scheme of the possible arrangement of such dead points with respect to the working arc A of the camera.

As is known, the presence of a singularity configuration P in a mechanical device implies a lability in the vicinity of this configuration, which in the technical field of the invention is also the one most frequently operated.

In fact, the displacement of the head hinge of the connecting rod orthogonally to the axis of the connecting rod itself is a first-order infinitesimal, while the elongation of the connecting rod and of the rocker arm is a second-order infinitesimal, i.e. of a higher order than that of the head hinge of the connecting rod, thus resulting in a kinematic compatibility of the camera's motion in the vicinity of the dead point.

In other words, in correspondence with a singularity configuration P there may be micro-displacements that cause inaccuracies in the motion of the camera itself installed on said type of devices, such that the mechanism is functional, but is not very effective in the vicinity of the singularity configuration, leading to a significantly reduced image quality in shots that include a passage of the camera through this configuration.

The aim of the present invention is to realise a load balancing device for heads for film and television shoots, capable of properly balancing said head even in singularity configurations, in particular always ensuring the correct univocity of motion and therefore a smooth and consistent operation throughout the working arc A ranging from -90° to +90° of the head's axis of rotation, thus improving the quality of the image/video obtained from the camera installed on the balancing device itself. The object of the present invention is a device for supporting and balancing the load of cameras for film and/or television shoots, said device comprising a main structure and a fixing plate for supporting the camera, said fixing plate being constrained in a centre of rotation on said main structure to perform a rotation with respect to a vertical axis of a shooting angle ϑ between -90° and +90°, said device further comprising
at least one first connecting rod element having a first end pivoted to said fixing plate at a first eccentric distance from said centre of rotation, a rocker arm element having a first hinge associated with the second end of said first connecting rod and a second hinge pivoted and coupled to said main structure,
at least one elastic element, pivoted at the top to said main structure and slidably coupled at the bottom to said rocker arm element,
said device being characterised in that it further comprises a second connecting rod having a first end pivoted to said fixing plate at a second eccentric distance from said centre of rotation and a second end associated with said first hinge of said rocker arm element, in that each connecting rod provides an oblong slot having at least one bend at its second end, in that said device is configured in such a way that when said shooting angle ϑ is equal to 0°, the eccentric distance O₁A₂ of the first connecting rod is oriented with respect to said vertical y axis by an offset angle *φ* greater than 0° and the eccentric distance O₁A₂' of the second connecting rod is oriented with respect to said vertical y axis by an offset angle *φ'* less than 0° and in such a way that the first hinge of said rocker arm element is pivoted in said bend of the oblong slot of each connecting rod, and
in that said device is configured in such a way that, when said shooting angle ϑ is greater than 0°, said first hinge of said rocker arm element is pivoted only in the bend of the slot of the first connecting rod and, when said shooting angle ϑ is less than 0°, said first hinge of said rocker arm element is pivoted only in the bend of the slot of the second connecting rod.

In particular, according to the invention, the axial width of the slot of each connecting rod measured along the axis between its ends can be at least equal to the length of the arc subtended between the two eccentric distances of the two connecting rods. Again, according to the invention, said axial width of the slot of each connecting rod can be equal to ${a}_{n} \geq 2 {φ}_{n} ⋅ {e}_{n}$ where
*aₙ* is equivalent to the axial width of the slot of a connecting rod,
*φₙ* is equivalent to the offset angle of the respective connecting rod, and
*eₙ* is equivalent to the eccentric distance of the respective connecting rod. Furthermore according to the invention, the first eccentric distance of the first connecting rod and the second eccentric distance of the second connecting rod can have the same length.

Further according to the invention, the offset angle of the second connecting rod can be the negative of the offset angle of the first connecting rod.

In addition, according to the invention, the amplitude of the offset angle of each connecting rod can be less than or equal to 8.5°.

More specifically, according to the invention, the axial width of the slot of each connecting rod can be equivalent to: ${a}_{n} < \left[AB-\left({R}_{1}+{R}_{2}\right)\right]$ where
*aₙ* is equivalent to the axial width of the slot of a connecting rod,
R₁ is the radius of the upper hinge of the respective connecting rod, and
R₂ is the radius of the bend of the oblong slot of the respective connecting rod.

Again, according to the invention, for each connecting rod the working angle, understood as the angle between the two dead point positions of the second end of each connecting rod can be equivalent to: $α \leq 90 ° .$

In particular, according to the invention, the length of each connecting rod can be obtained from the following formula: $α = {cos}^{- 1} \left(\frac{{\overline{{O}_{1} {B}^{II}}}^{2} + {\left(\overline{{O}_{1} {A}^{I}}+\overline{{A}^{I} {B}^{I}}\right)}^{2} - {\overline{{B}^{I} {B}^{II}}}^{2}}{2 \overline{{O}_{1} {B}^{II}} \left(\overline{{O}_{1} {A}^{I}}+\overline{{A}^{I} {B}^{I}}\right)}\right)$ where
O₁B" is the distance between the centre of rotation of the fixing plate and the second end of the respective connecting rod in its second dead point position,
O₁A' is the eccentric distance of the respective connecting rod,
A'B' is the length of the respective connecting rod,
B'B" is the distance between the two dead point positions of the second end of the respective connecting rod.

Furthermore according to the invention, said balancing device may further provide an eccentric body stably coupled to said fixing plate and comprising a first eccentric portion spaced from said centre of rotation by said first eccentric distance, and a second eccentric portion spaced from said centre of rotation by said second eccentric distance, wherein the first end of the first connecting rod is pivoted to said first eccentric portion and the second end of the second connecting rod is pivoted to said second eccentric portion.

Further according to the invention, said pair of connecting rods can be arranged at one side of said at least one elastic element with respect to a transverse axis passing through said centre of rotation and perpendicular to said vertical axis. Again according to the invention, said balancing device can comprise two pairs of said connecting rods, wherein the second pair of connecting rods is arranged at the side of said at least one elastic element opposite the side on which the first pair of connecting rods is arranged with respect to said transverse axis, wherein said rocker arm element provides two first hinges arranged on the two opposite sides of said at least one elastic element along said transverse axis and wherein each pair of connecting rods has the second ends associated with a respective first hinge of the rocker arm element.

In addition, according to the invention, said balancing device can comprise at least two elastic elements adapted to be subjected to axial deformation along deformation axes parallel to each other.

In particular, according to the invention, two of said elastic elements may have concentric axes, and one may be inserted within the footprint of the other.

In addition, according to the invention, said first hinge of said balance element can be arranged in correspondence with a plane passing through said vertical axis. Again according to the invention, means can also be provided for adjusting the position of said at least one elastic element with respect to said rocker arm element. Further according to the invention, said rocker arm element can provide at least one track-shaped portion, wherein said at least one elastic element may have a protruding pin at its lower end adapted to slide on said track-shaped portion by the action of said adjustment means.

Finally, according to the invention, said adjustment means may be fastening means, in particular a screw, and control means, such as for example a knob, adapted to act on said fastening means acting on the lower end of the at least one elastic element.

The invention will now be described for illustrative but not limitative purposes, with particular reference to the drawings of the attached figures, wherein:
Figure 1 shows a graphical scheme for calculating the potential energy of the mass of a head on which a camera, free to rotate around an axis of rotation at a fixed distance, is arranged;
Figure 2 shows a graphical scheme for identifying the dead points of a balancing device based on the Grashof quadrilateral;
Figure 3 shows a graphical scheme of a possible arrangement of the dead points with respect to the working arc A of a camera installed on a balancing device based on the kinematics of Figure 2;
Figure 4 shows the graphical scheme of Figure 2 wherein the working triangle of the connecting rod of the balancing device is highlighted between the two identifiable singularity positions P;
Figure 5 shows a perspective view of the balancing device according to the invention with an open structure, in a first embodiment;
Figure 6 shows a perspective view of the balancing device according to the invention with a closed structure, in a second embodiment;
Figure 7a shows a side view of the balancing device of Figure 5;
Figure 7b shows a sectional view along the VII-VII plane of the device of Figure 7a;
Figure 8a shows a bottom view of the device of Figure 7a;
Figure 8b shows a sectional view along the VIII-VIII plane of the device of Figure 8a;
Figure 9a shows a side view of the balancing device of Figure 6;
Figure 9b shows a side sectional view along a plane IX-IX of the device of Figure 9a;
Figure 10a shows a bottom view of the device of Figure 9a;
Figure 10b shows a sectional view along a plane X-X of the device of Figure 10a;
Figure 11a shows a side view of the balancing device according to the invention in a third embodiment;
Figure 11b shows a side sectional view along a plane XI-XI of the device of Figure 11a;
Figure 12a shows a bottom view of the device of Figure 11a;
Figure 12b shows a sectional view along a plane XII-XII of the device of Figure 12a;
Figure 13 shows a partially cutaway perspective view of the balancing device of Figure 6;
Figure 14 shows a perspective view of the balancing device according to the invention, according to a fourth embodiment, partially cutaway to allow the slot-connecting rod coupling mechanism to be viewed;
Figure 15 shows a side view of the two quadrilaterals of the crank - connecting rod - rocker arm - frame of the balancing device of Figure 5;
Figures 16a - 16c show a side view of the balancing device of Figure 14, wherein it is possible to view the coupling phases of the two-slot-connecting rod coupling assembly, based on a first counter-balancing angle γ₁;
Figures 17a - 17c show a side view of the balancing device of Figure 14, wherein it is possible to view the coupling phases of the two-slot-connecting rod coupling assembly, based on a second counter-balancing angle γ₂; and
Figure 18 shows a detail of Figure 17a.

With reference to the graphical scheme of Figures 1 - 3 and as previously described, balancing systems for supporting a camera for shooting images or videos, based on the Grashof quadrilateral, are known in the state of the art. As described, this prior art balancing device provides one or more profiled elements, hereinafter referred to as wing, which through one or more springs create a reaction force to the gravity acting on the camera. This reaction force is transmitted through a connecting rod to an eccentric body on the vertical axis of rotation.

With reference to Figure 2, the eccentric 1, the connecting rod 2 and the profiled element or wing 3 form the kinematic chain of the three mobile members of an articulated quadrilateral. In particular, the eccentric acts as a crank 1, while the wing is the rocker arm 3.

As previously stated, the reaction force generated by an elastic element is transmitted via the connecting rod 2 to the eccentric body 1 which acts as a crank, obtained on a side portion of the head adjacent to the axis of rotation O₁ of the head at a fixed distance called eccentricity e₂ coinciding with the segment O₁A (represented in the figure as O₁A' or O₁A" based on its position). Where the point O₁ in addition to representing the axis of rotation of the head, coincides with the axis of rotation of the crank 1 whose length is equal to the value of the eccentricity e₂, while the point A (represented in the figure as the points A' and A" based on its position) is the centre of rotation of the connecting rod 2.

From a theoretical point of view, according to the Grashof's classification of quadrilaterals, an articulated quadrilateral that meets the design constraints regarding the lengths of the mechanism's members to allow the proper closure, functionality and size must be of the crank-rocker arm class. Specifically, for each complete rotation of the crank, the rocker arm will reverse its motion twice and in correspondence with these reversals a singularity configuration will be obtained. For the balance between the potential energy of the camera's mass and the elastic energy of the elastic element, in particular of a spring, one of the two dead points, corresponding to the reversal of the rocker arm's motion, must necessarily be in correspondence with the horizontal position of the camera, in other words when the shooting angle ϑ, which is equivalent to the angle between the vertical y axis and the axis of the head t, is equal to 0° (see Figure 1). In fact, instant by instant the energy balance is: $mgh = mgR \left(1-cosϑ\right) = \frac{1}{2} k {x}^{2}$ where, with reference to Figure 1:
ϑ is the shooting angle, i.e. the angle between the shooting axis t and the vertical y axis,
*m* is the mass of the camera arranged on the shooting head,
*g* is the gravitational acceleration,
*h* is the current height of the camera's centre of gravity, which depends on ϑ, and is equivalent to the distance of the camera's centre of gravity from the plane on which the centre of rotation O₁ of the head lies,
*R* is the distance between the camera's centre of gravity and the rotation z axis or centre of rotation O₁,
*k* is the stiffness of the elastic element, and
*x* is the axial deformation, in particular the compression, of the elastic element.

From the previous relation it is evident that the potential energy of the camera is expressed as a function of the shooting angle ϑ and has a minimum precisely at ϑ = 0°, therefore the elastic energy must also have a minimum at ϑ = 0°.

In this position the axial deformation, in particular the compression, x of the spring element must be minimal, this condition can only be satisfied if ϑ = 0° corresponds to a reversal point of the rocker arm's motion and therefore if at ϑ = 0° there is a dead point of the articulated quadrilateral.

With reference to Figures 2 and 3, for an articulated quadrilateral of the crank 1 - rocker arm 3 type, a dead point configuration P occurs approximately every 180°, therefore in a working arc A of 180° (from -90° to +90°) if one of the *dead points* P1 is at the centre of the arc (i.e. for ϑ = 0°), there will be no other dead points in the same working arc A. In light of this, to overcome this issue it is sufficient to avoid the dead point configuration that occurs at ϑ = 0°.

It is however necessary to specify that the angles between the two *dead points* P1 and P2 may not be exactly equal to each other and therefore of 180°, but may differ by a working angle *α* which depends on the geometry of the articulated quadrilateral itself, in any case this construction condition does not affect the effectiveness of the solution according to the invention.

The invention proposed to overcome the issues of the known art, provides that the balancing device 100 further comprises a second crank 1', in particular a second eccentric body 1' or a second eccentric portion 1'.

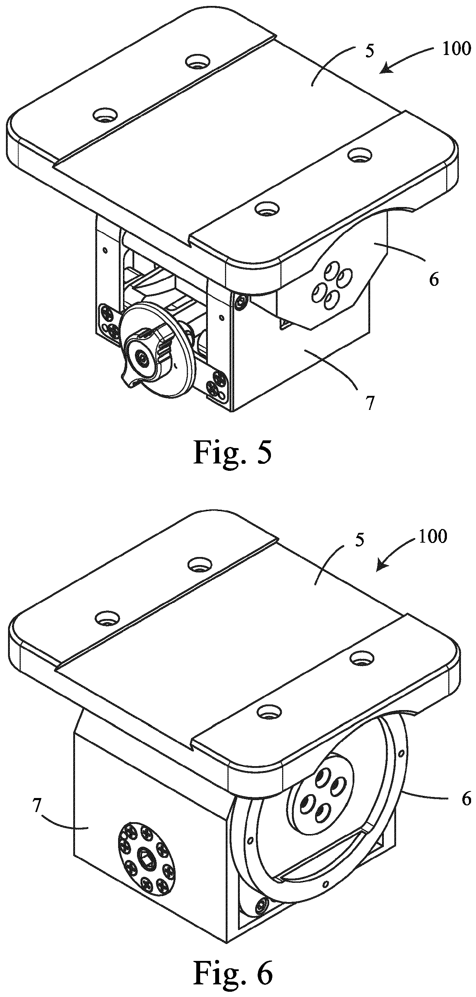

This balancing device 100 according to the invention is shown in various embodiments in Figures 5 - 18.

This second eccentric portion 1' is also obtained on a side portion of the head or main structure 7 coupled to the fixing plate 5 for supporting the camera and is offset with respect to said first eccentric portion 1, in particular it is offset by a fixed angle, also referred to as *offset angle φ*. The second eccentric portion 1' is also arranged at a fixed distance or eccentricity e₂' from the centre of rotation O₁ of the fixing plate 5 which corresponds to its centre of rotation.

Consequently, the introduction of a second connecting rod 2' is provided, which is pivoted on the rocker arm or wing 3 at the same point as the first connecting rod 2, in correspondence with a pin or first hinge 3' of the rocker arm 3.

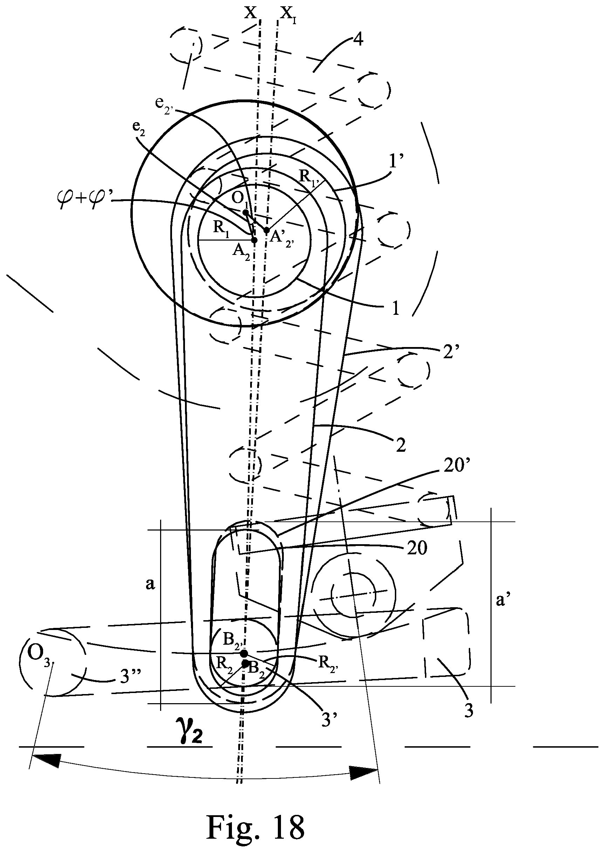

With reference to Figure 18, it is possible to view the fixed distances e₂ and e_{2'} respectively, coinciding with the segments O₁A₂ and O₁A₂', i.e. the two eccentricity values respectively associated with the connecting rods 2, 2'. Where the point O₁ represents the axis of rotation of the fixing plate 5 with respect to the structure of the head 7 which coincides with the axis of rotation of the two cranks 1, 1' which have a length equal to the respective values of eccentricity e₂ and e_{2'}, while the points A₂ and A₂' are respectively the two centres of rotation of the two connecting rods 2 and 2'. In this way, two articulated quadrilaterals of the crank - connecting rod - rocker arm - frame type are effectively realised, with the eccentric portions 1, 1' offset from each other and each pivoted eccentrically at the centre of rotation O₁ at a side portion of the head 7, each of which operates over half of the available working arc A, the first eccentric portion 1 between -90° and 0°, the second eccentric portion 1' between 0° and +90°. The two quadrilaterals, appropriately sized, therefore operate together only on the working arc A in the configuration wherein the shooting angle ϑ is equivalent to 0°.

In the portion of the working arc A wherein one of the two articulated quadrilaterals is not operating, the respective connecting rod 2, 2' is in fact decoupled from the pin or first hinge 3' of the rocker arm 3 thanks to the presence of an oblong slot 20, 20', having at least one bend, obtained at the foot or lower end or second end B₂, B₂' of each connecting rod 2, 2'.

The balancing device 100 according to the invention is configured in such a way that when said shooting angle ϑ is equal to 0°, the eccentric distance O₁A₂ of the first connecting rod 2 is oriented with respect to said vertical y axis by an offset angle *φ* greater than 0° and the eccentric distance O₁A₂' of the second connecting rod 2' is oriented with respect to said vertical y axis by an offset angle φ' less than 0° and in such a way that the first hinge 3' of said rocker arm element 3 is pivoted in said bend of the oblong slot 20, 20' of each connecting rod 2, 2'. Furthermore, said device is configured in such a way that when said shooting angle ϑ is greater than 0° said first hinge 3' of said rocker arm element 3 is pivoted only in the bend of the slot 20 of the first connecting rod 2, and when said shooting angle ϑ is less than 0° said first hinge 3' of said rocker arm element 3 is pivoted only in the bend of the slot 20' of the second connecting rod 2'.

Thanks to this solution, neither of the two articulated quadrilaterals will operate in a singularity configuration when under load, always ensuring the correct univocity of the motion and therefore a smooth and consistent operation throughout the entire working arc A, from -90° to +90°.

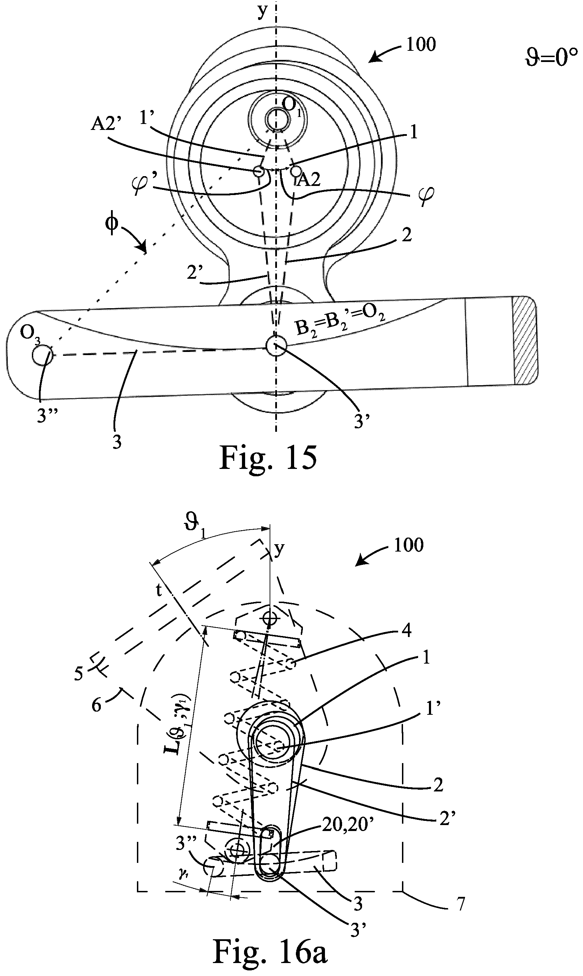

With reference to Figure 15, the length of the two cranks 1, 1', which corresponds to the eccentricity value of each crank 1, 1', in the embodiments described is preferably the same, while the offset between the two eccentric portions 1, 1' is the offset between the connecting rods 2, 2' themselves of the two articulated quadrilaterals, wherein the rocker arm or wing 3 is the common element to both the articulated quadrilaterals.

In the balancing device 100 according to the invention, the reaction force is generated by at least one elastic element 4, in particular comprising one or more springs 4, which is transmitted to the profiled element or wing 3, which in turn transmits this reaction force via at least one of said connecting rods 2, 2' to the eccentric portions 1, 1', which then receives a reaction moment that balances the overturning moment caused by gravity on the camera.

In the embodiments described herein, the elastic element is preferably of the type adapted to undergo axial deformations and can be one or more springs 4, in particular of the helical type. However, in other embodiments the elastic element can be a hydraulic piston, an elastomer, for example made of synthetic material. In other words, the elastic element must be able to return an equal and opposite elastic force based on the displacement performed.

This balancing device 100 has, at an upper portion thereof, a fixing plate 5 of the head 7 to fix a camera, said camera will rotate on the central z axis of rotation with respect to the centre of rotation O₁. The eccentric portions 1, 1' are integral with said fixing plate 5 and connected via any adapters 6.

Said rocker arm 3 is coupled both to an end portion of each of said connecting rods 2, 2', via said first hinge 3' in correspondence with said slots 20, 20', and at its other end, it is pivoted to the main structure of the head 7, via a second hinge 3". The main structure of the head 7 can be realised as either a closed or open structure. The choice of realising the balancing device 100 with a closed or open structure is evaluated on a case-by-case basis through a cost/benefit analysis. In fact, the closed structure is structurally more efficient compared to the open one, but it is more expensive to make and heavier than the latter.

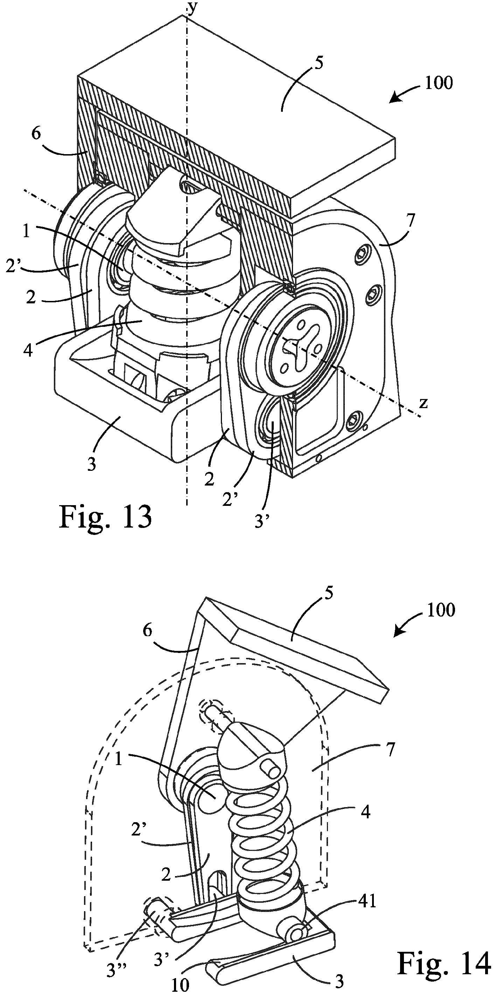

Furthermore, the balancing device 100 according to the invention has fastening means 8, in particular a screw 8, operated by control means 9, such as for example a knob 9, which allow a user to move the lower end of the at least one elastic element 4 on a track 10 obtained in the rocker arm 3, thus allowing the application point of the reaction force generated by said at least one elastic element 4 to be varied with respect to the fulcrum of the rocker arm 3 itself. Said track 10, shown in Figure 14, is substantially a shaped portion of the rocker arm 3 on which the lower support 41 of the elastic element 4 slides.

This allows the reaction moment generated on the cranks 1, 1', to be advantageously varied, so that it can be easily and quickly adapted by an operator to cameras of different weights.

The rocker arm 3 can be moved by at least one pair of connecting rods 2, 2' at one of its sides and operate in a cantilevered configuration or alternatively it can be connected to two pairs of connecting rods 2, 2' arranged one on each side of said rocker arm 3 via two respective first pins 3'.

According to the invention, the offset angle *φ* of each eccentric portion 1, 1', is preferably optimised to achieve the best response of the balancing device 100 on the camera around the shooting angle ϑ on the working arc A equal to 0°, preferably the offset angle *φ* should not exceed 8.5°, in order to avoid undesirable balancing errors at the ends of the working arc A of the camera.

With reference to Figure 15, it is shown how said offset angle *φ* (for ϑ = 0°) is between the segment O₁A₂' and the vertical y axis for the second eccentric portion 1' and is similarly between the segment O₁A₂ and the vertical y axis for the first eccentric portion 1.

In fact, the said offset angle *φ* between the eccentric portions 1, 1' introduces an undesired effect of anticipating the maximum of the reaction moment by an angle equal to the offset angle *φ*.

In fact, the maximum of the reaction moment should be at the ends of the working arc A (therefore at ±90°), wherein a small displacement of the maximum towards the centre of the working arc A is still acceptable, by virtue of the non-linearity of the trigonometric relationship that links the rotation of the camera and the variation of the arm with respect to the centre of gravity.

In order to avoid jamming caused by the overlap of the two offset mutually articulated quadrilaterals, a respective slot 20, 20' is in fact provided at the foot of each connecting rod 2, 2' which allows the decoupling between the respective connecting rod 2, 2' itself and said second hinge 3' of said rocker arm 3 beyond a specific structurally fixed working angle *α*, in particular 90°. When the camera rotates on the balancing device 100, the shooting angle ϑ inverts its sign (i.e. it goes from positive to negative values and vice versa) and consequently a first connecting rod 2 will operate for values of ϑ between 0 and +90°, while the second connecting rod 2' will operate for values of ϑ between -90° and 0 thanks to the presence of the two slots 20, 20' of each connecting rod 2, 2'.

Thanks to the correct sizing of each slot 20, 20' it is possible to guarantee the kinematic accuracy of the kinematics of the balancing device 100 according to the invention, wherein preferably each slot 20, 20' has an axial extension a, a', measured along a respective longitudinal x, x' axis defined respectively by the segments A₂B₂ for the first connecting rod 2 and A_{2'}B_{2'} for the second connecting rod 2', at least equal to the length of the arc subtended between the two eccentric portions 1, 1'.

This relationship can be expressed with the following formula: $a \geq 2 φ ⋅ e$ where:
a is the axial extension of each slot 20, 20',
e is the value of the eccentricity, which corresponds to the length of the respective eccentric portion 1, 1',
*φ* is the offset angle of each eccentric portion 1, 1'.

It is necessary to specify that this represents a minimum condition to avoid the interference between said two articulated quadrilaterals of the balancing device 100 according to the invention, and it has been assumed that the two eccentric portions 1, 1' have the same values of eccentricity e and offset angle *φ*, a condition which is however not strictly necessary.

The maximum value of each of said axial extensions a, a' of each slot 20, 20' depends on the size of the respective connecting rods 2, 2' and of the respective hinges 3' of the rocker arm 3. For the first connecting rod 2, this value of axial length a is equivalent to: $a < \left[A2B2-\left(R1+R2\right)\right.$ where R₁ is the radius of the upper hinge A₂ of the first connecting rod 2, and
R₂ is the radius of the lower hinge B₂ of the first connecting rod 2.

Similarly for the second connecting rod 2' the value of the axial length a' is equivalent to: $a ′ < \left[A2′B2′-\left(R1′+R2′\right)\right.$ where R₁' is the radius of the upper hinge A₂' of the second connecting rod 2', and
R₂' is the radius of the lower hinge B₂' of the second connecting rod 2'.

For the technical solution according to the invention to be effective, preferably the working angle *α* is equivalent to: $α \leq 90 °$ in order to ensure that each of the two articulated quadrilaterals, when under load during use, is not in a dead point configuration.

With reference to Figure 4, this condition is satisfied by properly sizing the length of the members of each articulated quadrilateral, specifically the ratio between the lengths of the frame and the rocker arm 3. In light of this, the relationship that links said working angle *α* to the other dimensional quantities of each articulated quadrilateral can be obtained by applying the cosine theorem to the triangle O₁B'B": $α = {cos}^{- 1} \left(\frac{{\overline{{O}_{1} {B}^{II}}}^{2} + {\left(\overline{{O}_{1} {A}^{I}}+\overline{{A}^{I} {B}^{I}}\right)}^{2} - {\overline{{B}^{I} {B}^{II}}}^{2}}{2 \overline{{O}_{1} {B}^{II}} \left(\overline{{O}_{1} {A}^{I}}+\overline{{A}^{I} {B}^{I}}\right)}\right)$

Thanks to these dimensional measures of the slots 20, 20' and of the working angle *α*, the balancing device 100 advantageously ensures that, in the working condition equal to 0° on the working arc A, it never operates in singularity conditions.

In fact, the presence of a second articulated quadrilateral, in particular thanks to the two connecting rods 2, 2' and to the respective slots 20, 20', allows the passage of the camera through the working point equal to 0° to be smooth.

This is possible because the camera is controlled, within the range -*α* ≤0 ≤ +*α* of the horizontal working angle equal to 0°, by both the articulated quadrilaterals thanks to the respective eccentricities of the eccentric portions 1, 1'.

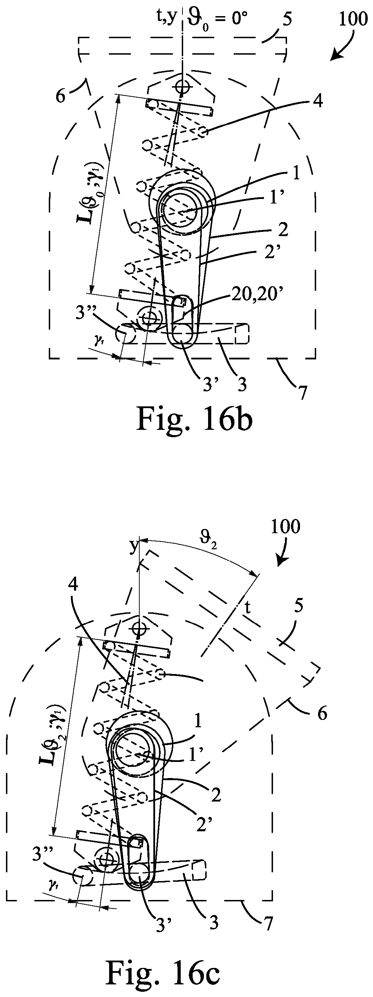

These aforementioned passages can be seen in Figures 16a - 16c, which show two levels of counterbalancing, both dependent on the shooting angle ϑ. In fact, based on the shooting angle ϑ the system is represented in three different positions, so as to highlight the slots 20, 20' of the respective connecting rods 2, 2', wherein:
for ϑ = 0° both connecting rods 2, 2' engage the rocker arm 3 (Figure 16b);
for ϑ = ϑ₁ only the second connecting rod 2' of the second articulated quadrilateral engages the rocker arm 3, while the first connecting rod 2 of the first articulated quadrilateral is not engaged (Figure 16a);
for ϑ = ϑ₂ vice versa only the first connecting rod 2 of the first articulated quadrilateral engages the rocker arm 3, while the second connecting rod 2' of the second articulated quadrilateral is not engaged (Figure 16c).

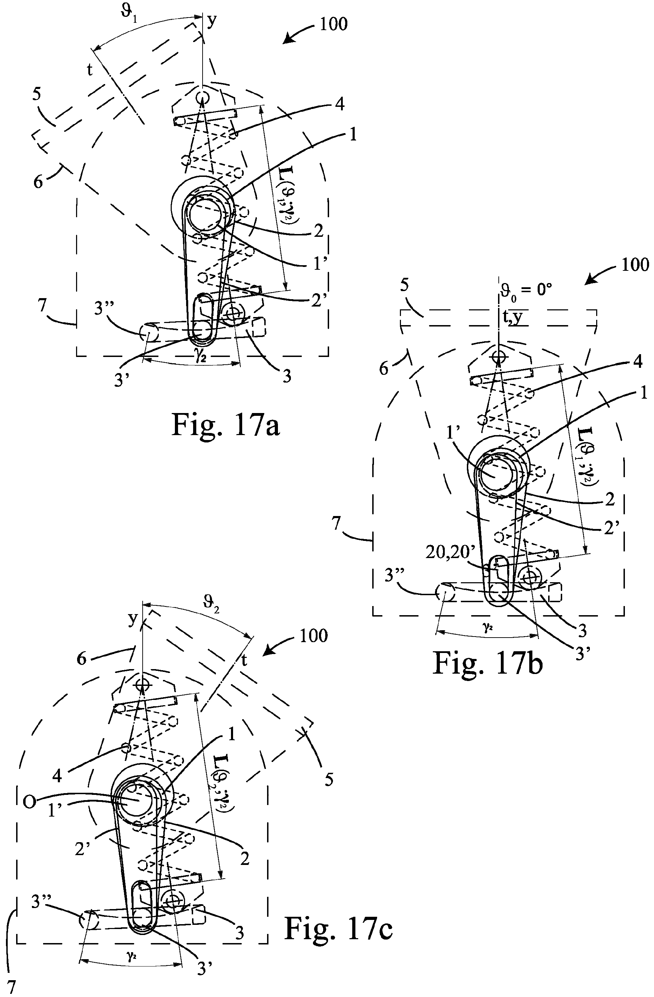

In Figures 17a - 17b the same three positions of the connecting rods 2, 2' are shown with a different level of counterbalancing defined by the counterbalancing angle γ equal to γ₂ greater than the counterbalancing angle γ₁ of Figures 16a - 16c.

The balancing device 100 according to the invention provides multiple embodiments, in particular with reference to the realisation of the at least one elastic element 4 and to the number of pairs of connecting rods 2, 2'.

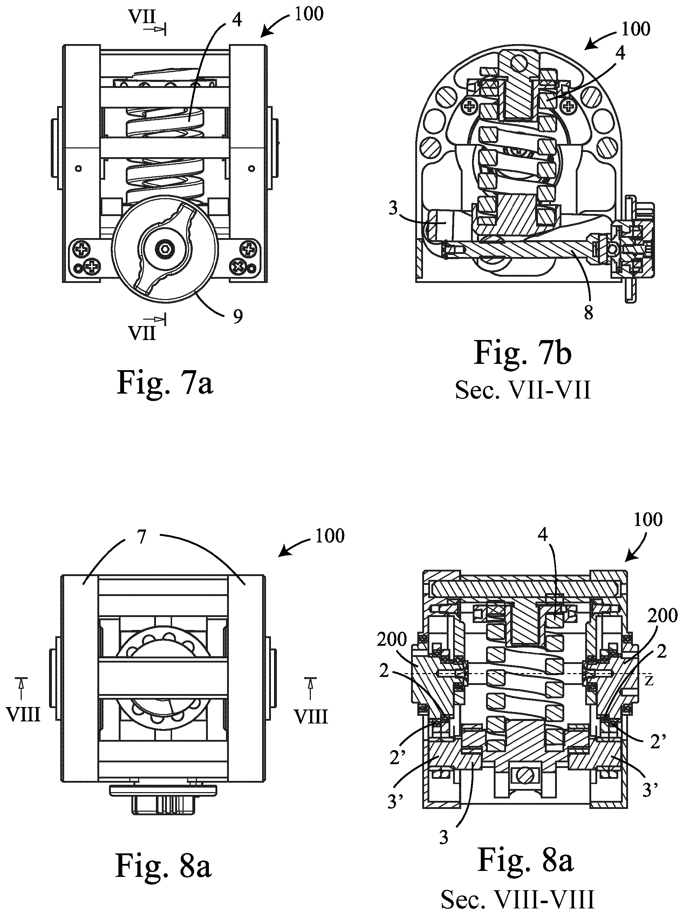

In a first embodiment, visible in Figures 7a - 8b, the balancing device 100 according to the invention provides a single elastic element 4, in particular a single spring 4, and two pairs of connecting rods 2, 2', each pair being coupled to each side of the rocker arm 3 via a respective second hinge 3'. This configuration of the balancing device 100 allows the rocker arm 3 to be loaded symmetrically, thus avoiding being subjected to torsion loading as occurs in the cantilevered configuration of the third and fourth embodiments. The cantilevered configuration implies an ad hoc sizing to resist this type of load.

On the other hand, the symmetrical configuration increases the cost and weight of the balancing device 100 itself since two pairs of connecting rods 2, 2' are used.

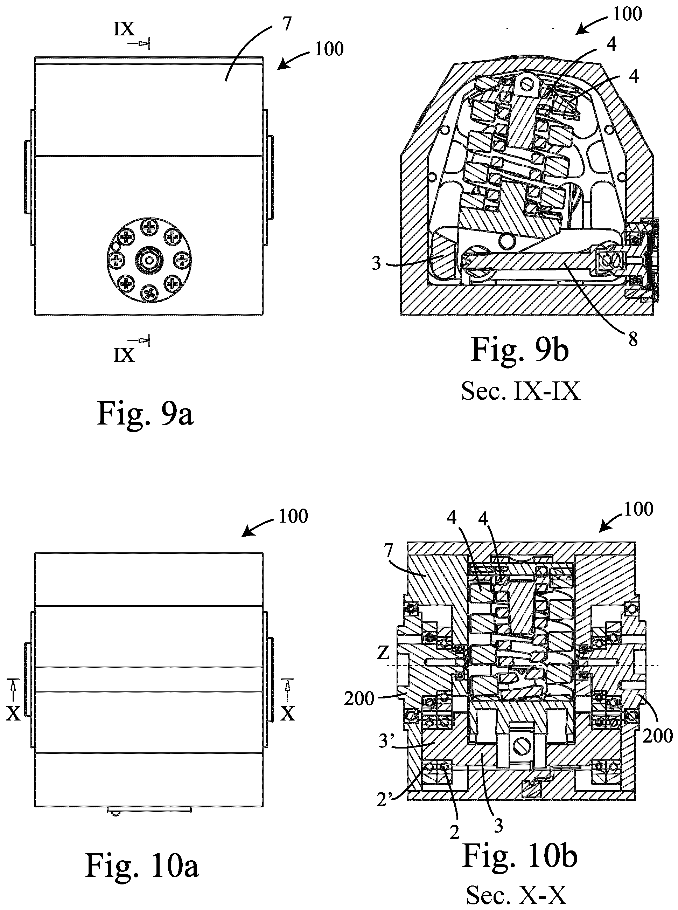

In a second embodiment, visible in Figures 9a - 10b and 13, the balancing device 100 according to the invention, unlike the previous embodiment, provides two elastic elements 4, in particular two concentric springs 4, one inserted within the footprint of the other, thus forming a single double-spiral spring element 4. The use of one or more springs 4 in parallel, in particular one inserted within the other, makes it possible to increase the stiffness k of the resulting spring and at the same time to optimise the space. Furthermore, as in the previous embodiment, the use of two pairs of connecting rods 2, 2' is provided.

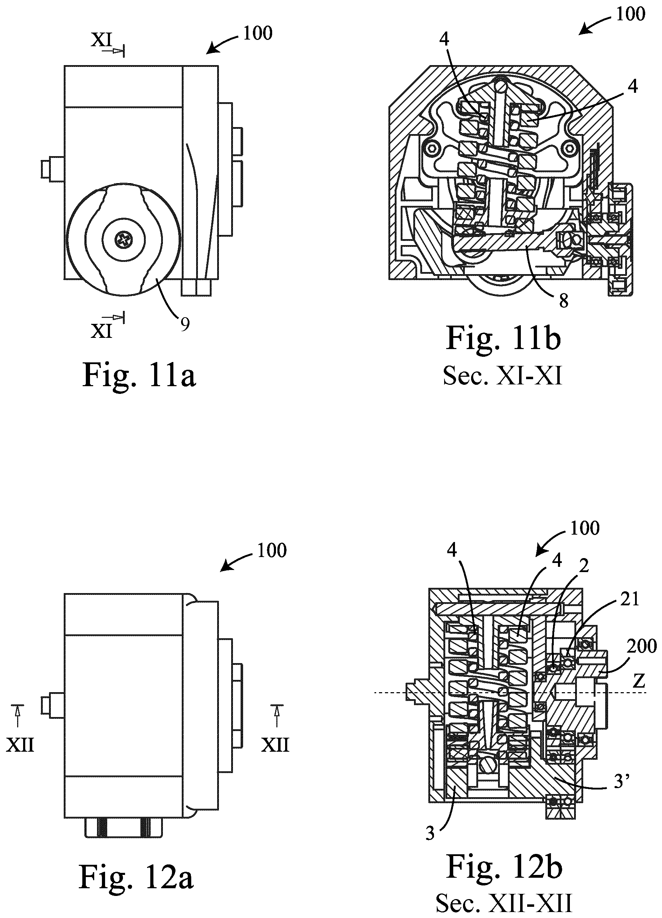

Finally, in a third embodiment, visible in Figures 11a - 12b, the balancing device 100 according to the invention provides said double-spiral spring element 4, as in the previous embodiments, but only one pair of connecting rods 2, 2', each coupled to one side of the rocker arm 3.

With particular reference to Figure 14, it can be seen how the rocker arm 3, in said fourth embodiment, hinged only at said second hinge 3' to the pair of connecting rods 2, 2', will operate in a cantilevered manner, in fact the rocker arm 3 will be subjected to an asymmetric load, being hinged to the connecting rods 2, 2' only on one side.

With particular reference to Figure 12b, it can be observed that, also in the third embodiment, a cantilevered configuration is shown wherein the rocker arm 3 operates with a fulcrum in correspondence with its pin 3' and a load that can be schematised as directed along the main axis of the springs 4.

In the foregoing, the preferred embodiments have been described and some variants of the present invention have been suggested, but it is to be understood that those skilled in the art may make modifications and changes without thereby departing from the relative scope of protection, as defined by the attached claims.

## Claims

1. A device (100) for supporting and balancing the load of cameras for film and/or television shoots, said device (100) comprising a main structure (7) and a fixing plate (5) for supporting the camera, said fixing plate (5) being constrained in a centre of rotation (O₁) on said main structure (7) to perform a rotation with respect to a vertical axis (y) of a shooting angle (ϑ) between -90° and +90°, said device (100) further comprising
at least one first connecting rod element (2) having a first end (A₂) pivoted to said fixing plate (5) at a first eccentric distance (O₁A₂) from said centre of rotation (O₁),
a rocker arm element (3) having a first hinge (3') associated with the second end (B₂) of said first connecting rod (2) and a second hinge (3") pivoted and coupled to said main structure (7),
at least one elastic element (4), pivoted at the top to said main structure (7) and slidably coupled at the bottom to said rocker arm element (3),
said device (100) being **characterised in that** it further comprises a second connecting rod (2') having a first end (A₂') pivoted to said fixing plate (5) at a second eccentric distance (O₁A₂') from said centre of rotation (O₁) and a second end (B₂') associated with said first hinge (3') of said rocker arm element (3),
**in that** each connecting rod (2; 2') provides an oblong slot (20; 20') having at least one bend at its second end (B₂; B₂'),
**in that** said device (100) is configured in such a way that when said shooting angle (ϑ) is equal to 0°, the eccentric distance (O₁A₂) of the first connecting rod (2) is oriented with respect to said vertical axis (y) by an offset angle (*φ*) greater than 0° and the eccentric distance (O₁A₂') of the second connecting rod (2') is oriented with respect to said vertical axis (y) by an offset angle (*φ*') less than 0°, and in such a way that the first hinge (3') of said rocker arm element (3) is pivoted in said bend of the oblong slot (20, 20') of each connecting rod (2, 2'), and
**in that** said device (100) is configured in such a way that, when said shooting angle (ϑ) is greater than 0°, said first hinge (3') of said rocker arm element (3) is pivoted only in the bend of the slot (20) of the first connecting rod (2) and, when said shooting angle (ϑ) is less than 0°, said first hinge (3') of said rocker arm element (3) is pivoted only in the bend of the slot (20') of the second connecting rod (2').

2. The device (100) according to the preceding claim, wherein the axial width (a; a') of the slot (20; 20') of each connecting rod (2; 2') measured along the axis between its ends (A₂B₂; A₂'B₂') is at least equal to the length of the arc subtended between the two eccentric distances (O₁A₂, O₁A₂') of the two connecting rods (2; 2').

3. The device (100) according to the preceding claim, wherein said axial width (a; a') of the slot (20; 20') of each connecting rod (2; 2') is equal to ${a}_{n} \geq 2 {φ}_{n} ⋅ {e}_{n}$ where
*aₙ* is equivalent to the axial width (a; a') of the slot (20; 20') of a connecting rod (2; 2'),
*φₙ* is equivalent to the offset angle (*φ*; *φ*') of the respective connecting rod (2; 2'), and
*eₙ* is equivalent to the eccentric distance (O₁A₂, O₁A₂') of the respective connecting rod (2; 2').

4. The device (100) according to any one of the preceding claims, wherein the first eccentric distance (O₁A₂) of the first connecting rod (2) and the second eccentric distance (O₁A₂') of the second connecting rod (2') have the same length (e).

5. The device (100) according to any one of the preceding claims, wherein the offset angle (*φ*') of the second connecting rod (2') is the negative of the offset angle (*φ*) of the first connecting rod (2).

6. The device (100) according to any one of the preceding claims, wherein the amplitude of the offset angle (*φ; φ'*) of each connecting rod (2; 2') is less than or equal to 8.5°.

7. The device (100) according to any one of the preceding claims, wherein the axial width *(a; a*') of the slot (20; 20') of each connecting rod (2; 2') is equivalent to: ${a}_{n} < \left[AB-\left({R}_{1}+{R}_{2}\right)\right]$ where
*aₙ* is equivalent to the axial width (a; a') of the slot (20; 20') of a connecting rod (2; 2'),
R₁ is the radius of the upper hinge (A₂; A₂') of the respective connecting rod (2; 2'), and
R₂ is the radius of the bend of the oblong slot (20; 20') of the respective connecting rod (2; 2').

8. The device (100) according to any one of the preceding claims, wherein for each connecting rod (2; 2') the working angle (*α*), understood as the angle between the two dead point positions (B', B") of the second end (B₂; B_{2'}) of each connecting rod (2; 2') is equivalent to: $α \leq 90 ° .$

9. The device (100) according to the preceding claim, wherein the length (A₂B₂; A_{2'}B_{2'}) of each connecting rod (2; 2') can be obtained from the following formula: $α = {cos}^{- 1} \left(\frac{{\overline{{O}_{1} {B}^{II}}}^{2} + {\left(\overline{{O}_{1} {A}^{I}}+\overline{{A}^{I} {B}^{I}}\right)}^{2} - {\overline{{B}^{I} {B}^{II}}}^{2}}{2 \overline{{O}_{1} {B}^{II}} \left(\overline{{O}_{1} {A}^{I}}+\overline{{A}^{I} {B}^{I}}\right)}\right)$ where
O₁B" is the distance between the centre of rotation (O₁) of the fixing plate (5) and the second end (B₂; B_{2'}) of the respective connecting rod (2) in its second dead point position (B"),
O₁A' is the eccentric distance (O₁A₂; O₁A₂') of the respective connecting rod (2; 2'),
A'B' is the length (A₂B₂; A_{2'}B_{2'}) of the respective connecting rod (2; 2'),
B'B" is the distance between the two dead point positions of the second end (B₂; B_{2'}) of the respective connecting rod (2; 2').

10. The device (100) according to any one of the preceding claims, wherein it further provides an eccentric body (200) stably coupled to said fixing plate (5) and comprising a first eccentric portion (1) spaced from said centre of rotation (O₁) by said first eccentric distance (O₁A₂), and a second eccentric portion (1') spaced from said centre of rotation (O₁) by said second eccentric distance (O₁A_{2'}), wherein the first end (A₂) of the first connecting rod (2) is pivoted to said first eccentric portion (1) and the second end (A_{2'}) of the second connecting rod (2') is pivoted to said second eccentric portion (1).

11. The device (100) according to any one of the preceding claims, wherein said pair of connecting rods (2, 2') is arranged at one side of said at least one elastic element (4) with respect to a transverse axis (z) passing through said centre of rotation (O₁) and perpendicular to said vertical axis (y).

12. The device (100) according to the preceding claim, wherein it comprises two pairs of said connecting rods (2, 2"), wherein the second pair of connecting rods (2, 2") is arranged at the side of said at least one elastic element (4) opposite the side on which the first pair of connecting rods (2, 2") is arranged with respect to said transverse axis (z), wherein said rocker arm element (3) provides two first hinges (3') arranged on the two opposite sides of said at least one elastic element (4) along said transverse axis (z) and wherein each pair of connecting rods (2, 2') has the second ends (B₂; B_{2'}) associated with a respective first hinge (3') of the rocker arm element (3).

13. The device (100) according to any one of the preceding claims, wherein it comprises at least two elastic elements (4) adapted to be subjected to axial deformation along deformation axes parallel to each other.

14. The device (100) according to the preceding claim, wherein it comprises two of said elastic elements (4) which have concentric axes, and one inserted within the footprint of the other.

15. The device (100) according to any one of the preceding claims, wherein said first hinge (3') of said rocker arm element (3) is arranged in correspondence with a plane passing through said vertical axis (y).

16. The device (100) according to any one of the preceding claims, wherein means are also provided for adjusting the position of said at least one elastic element (4) with respect to said rocker arm element (3).

17. The device (100) according to claim 16, wherein said rocker arm element (3) provides at least one track-shaped portion (10), wherein said at least one elastic element (4) has a protruding pin (41) at its lower end adapted to slide on said track-shaped portion (10) by the action of said adjustment means.

18. The device (100) according to claims 16 or 17, wherein said adjustment means are fastening means (8), in particular a screw (8), and control means (9), such as for example a knob (9), adapted to act on said fastening means (8) acting on the lower end of the at least one elastic element (4).

## Patentansprüche

1. Vorrichtung (100) zum Tragen und Ausgleichen der Last von Kameras für Film- und/oder Fernsehaufnahmen, wobei die Vorrichtung (100) eine Hauptstruktur (7) und eine Befestigungsplatte (5) zum Tragen der Kamera umfasst, wobei die Befestigungsplatte (5) in einem Drehzentrum (O₁) an der Hauptstruktur (7) gelagert ist, um gegenüber einer vertikalen Achse (y) eine Drehung um einen Aufnahmewinkel (ϑ) zwischen -90° und +90° auszuführen, wobei die Vorrichtung (100) ferner umfasst
mindestens ein erstes Verbindungsstangenelement (2) mit einem ersten Ende (A₂) das in einem ersten Exzenterabstand (O₁A₂) von dem Drehzentrum (O₁) gelenkig mit der Befestigungsplatte (5) verbunden ist, ein Kipphebelelement (3) mit einem ersten Gelenk (3'), das dem zweiten Ende (B₂) der ersten Verbindungsstange (2) zugeordnet ist, und einem zweiten Gelenk (3"), das gelenkig mit der Hauptstruktur (7) verbunden und an diese gekoppelt ist,
mindestens ein elastisches Element (4), das oben gelenkig mit der Hauptstruktur (7) verbunden und unten verschiebbar mit dem Kipphebelelement (3) gekoppelt ist,
wobei die Vorrichtung (100) **dadurch gekennzeichnet ist, dass** sie ferner eine zweite Verbindungsstange (2') mit einem ersten Ende (A₂') umfasst, das in einem zweiten Exzenterabstand (O₁A₂') von dem Drehzentrum (O₁) gelenkig mit der Befestigungsplatte (5) verbunden ist, und mit einem zweiten Ende (B₂') das dem ersten Gelenk (3') des Kipphebelelements (3) zugeordnet ist, dass jede Verbindungsstange (2; 2') ein Langloch (20; 20') aufweist, das an seinem zweiten Ende (B₂; B₂') mindestens eine Krümmung aufweist,
dass die Vorrichtung (100) derart ausgebildet ist, dass, wenn der Aufnahmewinkel (ϑ) gleich 0° ist, der Exzenterabstand (O₁A₂) der ersten Verbindungsstange (2) gegenüber der vertikalen Achse (y) um einen Versatzwinkel (φ) größer als 0° ausgerichtet ist und der Exzenterabstand (O₁A₂') der zweiten Verbindungsstange (2') gegenüber der vertikalen Achse (y) um einen Versatzwinkel (φ') kleiner als 0° ausgerichtet ist, und derart, dass das erste Gelenk (3') des Kipphebelelements (3) in der Krümmung des Langlochs (20, 20') jeder Verbindungsstange (2, 2') gelenkig gelagert ist, und
dass die Vorrichtung (100) derart ausgebildet ist, dass, wenn der Aufnahmewinkel (ϑ) größer als 0° ist, das erste Gelenk (3') des Kipphebelelements (3) nur in der Krümmung des Langlochs (20) der ersten Verbindungsstange (2) gelenkig gelagert ist und, wenn der Aufnahmewinkel (ϑ) kleiner als 0° ist, das erste Gelenk (3') des Kipphebelelements (3) nur in der Krümmung des Langlochs (20') der zweiten Verbindungsstange (2') gelenkig gelagert ist.

2. Vorrichtung (100) nach dem vorhergehenden Anspruch, wobei die axiale Breite (a; a') des Langlochs (20; 20') jeder Verbindungsstange (2; 2'), gemessen entlang der Achse zwischen deren Enden (A₂B₂; A₂'B₂') mindestens gleich der Länge des Bogens ist, der zwischen den beiden Exzenterabständen (O₁A₂, O₁A₂') der beiden Verbindungsstangen (2; 2') aufgespannt ist.

3. Vorrichtung (100) nach dem vorhergehenden Anspruch, wobei die axiale Breite (a; a') des Langlochs (20; 20') jeder Verbindungsstange (2; 2') gleich ist ${a}_{n} \geq 2 {φ}_{n} ⋅ {e}_{n}$ wobei
*aₙ* der axialen Breite (a; a') des Langlochs (20; 20') einer Verbindungsstange (2; 2') entspricht,
*φₙ* dem Versatzwinkel (φ; φ') der jeweiligen Verbindungsstange (2; 2') entspricht, und
*eₙ* dem Exzenterabstand (O₁A₂, O₁A₂') der jeweiligen Verbindungsstange (2, 2') entspricht.

4. Vorrichtung (100) nach einem der vorhergehenden Ansprüche, wobei der erste Exzenterabstand (O₁A₂) der ersten Verbindungsstange (2) und der zweite Exzenterabstand (O₁A₂') der zweiten Verbindungsstange (2') die gleiche Länge (e) aufweisen.

5. Vorrichtung (100) nach einem der vorhergehenden Ansprüche, wobei der Versatzwinkel (φ') der zweiten Verbindungsstange (2') das Negative des Versatzwinkels (φ) der ersten Verbindungsstange (2) ist.

6. Vorrichtung (100) nach einem der vorhergehenden Ansprüche, wobei der Betrag des Versatzwinkels (φ; φ') jeder Verbindungsstange (2; 2') kleiner als oder gleich 8,5° ist.

7. Vorrichtung (100) nach einem der vorhergehenden Ansprüche, wobei die axiale Breite (a; a') des Langlochs (20; 20') jeder Verbindungsstange (2; 2') der folgenden Beziehung entspricht: ${a}_{n} < \left[AB-\left({R}_{1}+{R}_{2}\right)\right]$ wobei
aₙ der axialen Breite (a; a') des Langlochs (20; 20') einer Verbindungsstange (2; 2') entspricht,
R₁ der Radius des oberen Gelenks (A₂; A₂') der jeweiligen Verbindungsstange (2; 2') ist, und
R₂ der Radius der Krümmung des Langlochs (20; 20') der jeweiligen Verbindungsstange (2; 2') ist.

8. Vorrichtung (100) nach einem der vorhergehenden Ansprüche, wobei für jede Verbindungsstange (2; 2') der Arbeitswinkel (α), verstanden als der Winkel zwischen den beiden Totpunktstellungen (B', B") des zweiten Endes (B₂; B_{2'}) jeder Verbindungsstange (2; 2'), der folgenden Beziehung entspricht: $α \leq 90 ° .$

9. Vorrichtung (100) nach dem vorhergehenden Anspruch, wobei die Länge (A₂B₂; A₂'B₂') jeder Verbindungsstange (2; 2') anhand der folgenden Formel bestimmt werden kann: $α = {cos}^{- 1} \left(\frac{{\overline{{O}_{1} {B}^{II}}}^{2} + {\left(\overline{{O}_{1} {Λ}^{I}}+\overline{{Λ}^{I} {B}^{I}}\right)}^{2} - {\overline{{B}^{I} {B}^{II}}}^{2}}{2 \overline{{O}_{1} {B}^{II}} \left(\overline{{O}_{1} {Λ}^{I}}+\overline{{Λ}^{I} {B}^{I}}\right)}\right)$ wobei
O₁B" der Abstand zwischen dem Drehzentrum (O₁) der Befestigungsplatte (5) und dem zweiten Ende (B₂; B_{2'}) der jeweiligen Verbindungsstange (2) in deren zweiter Totpunktstellung (B") ist,
O₁A' der Exzenterabstand (O₁A₂; O₁A₂) der jeweiligen Verbindungsstange (2; 2') ist,
A'B' die Länge (A₂B₂; A_{2'}B_{2'} ) der jeweiligen Verbindungsstange (2; 2') ist,
B'B" der Abstand zwischen den beiden Totpunktstellungen des zweiten Endes (B2; B2') der jeweiligen Verbindungsstange (2; 2') ist.

10. Vorrichtung (100) nach einem der vorhergehenden Ansprüche, wobei sie ferner einen Exzenterkörper (200) aufweist, der fest mit der Befestigungsplatte (5) gekoppelt ist und einen ersten Exzenterabschnitt (1), der von dem Drehzentrum (O₁) um den ersten Exzenterabstand (O₁A₂), beabstandet ist, und einen zweiten Exzenterabschnitt (1'), der von dem Drehzentrum (O₁) um den zweiten Exzenterabstand (O₁A₂), beabstandet ist, umfasst, wobei das erste Ende (A₂) der ersten Verbindungsstange (2) gelenkig mit dem ersten Exzenterabschnitt (1) verbunden ist und das zweite Ende (A_{2'}) der zweiten Verbindungsstange (2') gelenkig mit dem zweiten Exzenterabschnitt (1) verbunden ist.

11. Vorrichtung (100) nach einem der vorhergehenden Ansprüche, wobei das Paar von Verbindungsstangen (2, 2') bezüglich einer durch das Drehzentrum (O₁) verlaufenden und zu der vertikalen Achse (y) senkrechten Querachse (z) auf einer Seite des mindestens einen elastischen Elements (4) angeordnet ist.

12. Vorrichtung (100) nach dem vorhergehenden Anspruch, wobei sie zwei Paare der Verbindungsstangen (2, 2") umfasst, wobei das zweite Paar von Verbindungsstangen (2, 2") bezüglich der Querachse (z) auf derjenigen Seite des mindestens einen elastischen Elements (4) angeordnet ist, die der Seite gegenüberliegt, auf der das erste Paar von Verbindungsstangen (2, 2") angeordnet ist, wobei das Kipphebelelement (3) zwei erste Gelenke (3') aufweist, die entlang der Querachse (z) auf den beiden gegenüberliegenden Seiten des mindestens einen elastischen Elements (4) angeordnet sind, und wobei jedes Paar von Verbindungsstangen (2, 2') zweite Enden (B₂; B₂') aufweist, die einem jeweiligen ersten Gelenk (3') des Kipphebelelements (3) zugeordnet sind.

13. Vorrichtung (100) nach einem der vorhergehenden Ansprüche, wobei sie mindestens zwei elastische Elemente (4) umfasst, die dazu ausgebildet sind, entlang zueinander paralleler Verformungsachsen einer axialen Verformung unterzogen zu werden.

14. Vorrichtung (100) nach dem vorhergehenden Anspruch, wobei sie zwei der elastischen Elemente (4) umfasst, die konzentrische Achsen aufweisen, wobei eines innerhalb des Bauraums des anderen angeordnet ist.

15. Vorrichtung (100) nach einem der vorhergehenden Ansprüche, wobei das erste Gelenk (3') des Kipphebelelements (3) im Bereich einer durch die vertikale Achse (y) verlaufenden Ebene angeordnet ist.

16. Vorrichtung (100) nach einem der vorhergehenden Ansprüche, wobei ferner Mittel zum Einstellen der Position des mindestens einen elastischen Elements (4) gegenüber dem Kipphebelelement (3) vorgesehen sind.

17. Vorrichtung (100) nach Anspruch 16, wobei das Kipphebelelement (3) mindestens einen bahnförmigen Abschnitt (10) aufweist, wobei das mindestens eine elastische Element (4) an seinem unteren Ende einen vorstehenden Stift (41) aufweist, der dazu ausgebildet ist, durch die Wirkung der Einstellmittel auf dem bahnförmigen Abschnitt (10) zu gleiten.

18. Vorrichtung (100) nach Anspruch 16 oder 17, wobei die Einstellmittel Befestigungsmittel (8), insbesondere eine Schraube (8), und Betätigungsmittel (9), wie beispielsweise einen Drehknopf (9), sind, die dazu ausgebildet sind, auf die Befestigungsmittel (8) einzuwirken, welche auf das untere Ende des mindestens einen elastischen Elements (4) einwirken.

## Revendications

1. Un dispositif (100) destiné à supporter et à équilibrer la charge de caméras pour des prises de film et/ou de télévision, ledit dispositif (100) comprenant une structure principale (7) et une plaque de fixation (5) destinée à supporter la caméra, ladite plaque de fixation (5) étant contrainte au niveau d'un centre de rotation (O₁) sur ladite structure principale (7) pour effectuer une rotation, par rapport à un axe vertical (y), selon un angle de prise de vue (ϑ) entre -90° et +90°, ledit dispositif (100) comprenant en outre
au moins un premier élément de bielle (2) ayant une première extrémité (A₂) articulée à ladite plaque de fixation (5) à une première distance excentrique (O₁A₂) dudit centre de rotation (O₁),
un élément de culbuteur (3) ayant une première articulation (3') associée à la seconde extrémité (B₂) de ladite première bielle (2) et une seconde articulation (3") articulée et couplée à ladite structure principale (7),
au moins un élément élastique (4), articulé dans sa partie supérieure à ladite structure principale (7) et couplé de manière coulissante dans sa partie inférieure audit élément de culbuteur (3),
ledit dispositif (100) étant **caractérisé en ce qu'**il comprend en outre une seconde bielle (2') ayant une première extrémité (A₂') articulée à ladite plaque de fixation (5) à une seconde distance excentrique (O₁A₂') dudit centre de rotation (O₁) et une seconde extrémité (B2') associée à ladite première articulation (3') dudit élément de culbuteur (3),
**en ce que** chaque bielle (2 ; 2') présente une fente oblongue (20 ; 20') ayant au moins un coude au niveau de sa seconde extrémité (B₂ ; B₂'),
**en ce que** ledit dispositif (100) est configuré de telle sorte que, lorsque ledit angle de prise de vue (ϑ) est égal à 0°, la distance excentrique (O₁A₂) de la première bielle (2) est orientée par rapport audit axe vertical (y) selon un angle de décalage (φ) supérieur à 0° et la distance excentrique (O₁A₂') de la seconde bielle (2') est orientée par rapport audit axe vertical (y) selon un angle de décalage (φ') inférieur à 0°, et de telle sorte que la première articulation (3') dudit élément de culbuteur (3) est articulée dans ledit coude de la fente oblongue (20, 20') de chaque bielle (2, 2'), et
**en ce que** ledit dispositif (100) est configuré de telle sorte que, lorsque ledit angle de prise de vue (ϑ) est supérieur à 0°, ladite première articulation (3') dudit élément de culbuteur (3) est articulée uniquement dans le coude de la fente (20) de la première bielle (2) et, lorsque ledit angle de prise de vue (ϑ) est inférieur à 0°, ladite première articulation (3') dudit élément de culbuteur (3) est articulée uniquement dans le coude de la fente (20') de la seconde bielle (2').

2. Le dispositif (100) selon la revendication précédente, dans lequel la largeur axiale (a ; a') de la fente (20 ; 20') de chaque bielle (2 ; 2'), mesurée le long de l'axe entre ses extrémités (A₂B₂ ; A₂'B₂') est au moins égale à la longueur de l'arc sous-tendu entre les deux distances excentriques (O₁A₂, O₁A₂') des deux bielles (2 ; 2').

3. Le dispositif (100) selon la revendication précédente, dans lequel ladite largeur axiale (a ; a') de la fente (20 ; 20') de chaque bielle (2 ; 2') est égale à ${a}_{n} \geq 2 {φ}_{n} ⋅ {e}_{n}$ où
*aₙ* équivaut à la largeur axiale (a ; a') de la fente (20 ; 20') d'une bielle (2 ; 2'),
*φₙ* équivaut à l'angle de décalage (φ ; φ') de la bielle respective (2 ; 2'), et
*eₙ* équivaut à la distance excentrique (O₁A₂, O₁A₂') de la bielle respective (2, 2').

4. Le dispositif (100) selon l'une quelconque des revendications précédentes, dans lequel la première distance excentrique (O₁A₂) de la première bielle (2) et la seconde distance excentrique (O₁A₂') de la seconde bielle (2') ont la même longueur (e).

5. Le dispositif (100) selon l'une quelconque des revendications précédentes, dans lequel l'angle de décalage (φ') de la seconde bielle (2') est l'opposé de l'angle de décalage (φ) de la première bielle (2).

6. Le dispositif (100) selon l'une quelconque des revendications précédentes, dans lequel l'amplitude de l'angle de décalage (φ ; φ') de chaque bielle (2 ; 2') est inférieure ou égale à 8,5°.

7. Le dispositif (100) selon l'une quelconque des revendications précédentes, dans lequel la largeur axiale (a ; a') de la fente (20 ; 20') de chaque bielle (2 ; 2') équivaut à : ${a}_{n} < \left[AB-\left({R}_{1}+{R}_{2}\right)\right]$ où
aₙ équivaut à la largeur axiale (a ; a') de la fente (20 ; 20') d'une bielle (2 ; 2'),
R₁ est le rayon de l'articulation supérieure (A₂ ; A₂') de la bielle respective (2 ; 2'), et
R₂ est le rayon du coude de la fente oblongue (20 ; 20') de la bielle respective (2 ; 2').

8. Le dispositif (100) selon l'une quelconque des revendications précédentes, dans lequel, pour chaque bielle (2 ; 2'), l'angle de travail (a), entendu comme l'angle entre les deux positions de point mort (B', B") de la seconde extrémité (B₂; B_{2'}) de chaque bielle (2 ; 2') équivaut à : $α \leq 90 ° .$

9. Le dispositif (100) selon la revendication précédente, dans lequel la longueur (A₂B₂ ; A₂'B₂') de chaque bielle (2 ; 2') peut être obtenue à partir de la formule suivante : $α = {cos}^{- 1} \left(\frac{{\overline{{O}_{1} {B}^{II}}}^{2} + {\left(\overline{{O}_{1} {Λ}^{I}}+\overline{{Λ}^{I} {B}^{I}}\right)}^{2} - {\overline{{B}^{I} {B}^{II}}}^{2}}{2 \overline{{O}_{1} {B}^{II}} \left(\overline{{O}_{1} {Λ}^{I}}+\overline{{Λ}^{I} {B}^{I}}\right)}\right)$ où
O₁B" est la distance entre le centre de rotation (O₁) de la plaque de fixation (5) et la seconde extrémité (B₂ ; B_{2'}) de la bielle respective (2) dans sa seconde position de point mort (B"),
O₁A' est la distance excentrique (O₁A₂ ; O₁A₂) de la bielle respective (2 ; 2'),
A'B' est la longueur (A₂B₂ ; A₂'B₂') de la bielle respective (2 ; 2'),
B'B" est la distance entre les deux positions de point mort de la seconde extrémité (B₂ ; B_{2'}) de la bielle respective (2 ; 2').

10. Le dispositif (100) selon l'une quelconque des revendications précédentes, dans lequel il comprend en outre un corps excentrique (200) couplé de manière stable à ladite plaque de fixation (5) et comprenant une première portion excentrique (1) espacée dudit centre de rotation (O₁) de ladite première distance excentrique (O₁A₂), et une seconde portion excentrique (1') espacée dudit centre de rotation (O₁) de ladite seconde distance excentrique (O₁A₂), dans lequel la première extrémité (A₂) de la première bielle (2) est articulée à ladite première portion excentrique (1) et la seconde extrémité (A_{2'}) de la seconde bielle (2') est articulée à ladite seconde portion excentrique (1).

11. Le dispositif (100) selon l'une quelconque des revendications précédentes, dans lequel ladite paire de bielles (2, 2') est disposée d'un côté dudit au moins un élément élastique (4) par rapport à un axe transversal (z) passant par ledit centre de rotation (O₁) et perpendiculaire audit axe vertical (y).

12. Le dispositif (100) selon la revendication précédente, dans lequel il comprend deux paires desdites bielles (2, 2"), dans lequel la seconde paire de bielles (2, 2") est disposée du côté dudit au moins un élément élastique (4) opposé au côté sur lequel la première paire de bielles (2, 2") est disposée par rapport audit axe transversal (z), dans lequel ledit élément de culbuteur (3) présente deux premières articulations (3') disposées sur les deux côtés opposés dudit au moins un élément élastique (4) le long dudit axe transversal (z) et dans lequel chaque paire de bielles (2, 2') a les secondes extrémités (B₂; B₂') associées à une première articulation respective (3') de l'élément de culbuteur (3).

13. Le dispositif (100) selon l'une quelconque des revendications précédentes, dans lequel il comprend au moins deux éléments élastiques (4) adaptés pour être soumis à une déformation axiale le long d'axes de déformation parallèles entre eux.

14. Le dispositif (100) selon la revendication précédente, dans lequel il comprend deux desdits éléments élastiques (4) qui ont des axes concentriques, l'un étant inséré à l'intérieur de l'encombrement de l'autre.

15. Le dispositif (100) selon l'une quelconque des revendications précédentes, dans lequel ladite première articulation (3') dudit élément de culbuteur (3) est disposée au niveau d'un plan passant par ledit axe vertical (y).

16. Le dispositif (100) selon l'une quelconque des revendications précédentes, dans lequel des moyens sont également prévus pour régler la position dudit au moins un élément élastique (4) par rapport audit élément de culbuteur (3).

17. Le dispositif (100) selon la revendication 16, dans lequel ledit élément de culbuteur (3) présente au moins une portion en forme de piste (10), dans lequel ledit au moins un élément élastique (4) présente, à son extrémité inférieure, une broche saillante (41) adaptée pour coulisser sur ladite portion en forme de piste (10) sous l'action desdits moyens de réglage.

18. Le dispositif (100) selon les revendications 16 ou 17, dans lequel lesdits moyens de réglage sont des moyens de fixation (8), en particulier une vis (8), et des moyens de commande (9), tels que, par exemple, un bouton (9), adapté pour agir sur lesdits moyens de fixation (8) agissant sur l'extrémité inférieure dudit au moins un élément élastique (4).
